# EUROPÄISCHE PATENTSCHRIFT

(11) **EP 0 752 137 B1**
(45) Veröffentlichungstag und Bekanntmachung des Hinweises auf die Patenterteilung: **17.11.1999**
(21) Anmeldenummer: 95912247.4
(22) Anmeldetag: 13.03.1995
(51) Int. Cl.: G06F 17/60

(54) **IDENTIFIKATIONS- UND KONTROLLSYSTEM FÜR VERARBEITUNGS- UND/ODER TRANSPORTGUT**
IDENTIFICATION AND CONTROL SYSTEM FOR PROCESSED AND/OR TRANSPORTED GOODS
SYSTEME D'IDENTIFICATION ET DE CONTROLE DE PRODUITS A TRAITER ET/OU A TRANSPORTER

(30) Priorität: 15.03.1994 DE 4408650; 28.01.1995 DE 19502689
(43) Veröffentlichungstag der Anmeldung: 08.01.1997
(73) Patentinhaber: Hähnel, Olaf, D-33098 Paderborn (DE); Westfleisch Vieh- und Fleischzentrale Westfalen e.G., 48143 Münster (DE)
(72) Erfinder: Hähnel, Olaf, 33098 Paderborn (DE)
(74) Vertreter: Eikel, Cordula
(86) Internationale Anmeldenummer: EP9500922
(87) Internationale Veröffentlichungsnummer: WO9525315

(56) Entgegenhaltungen:
- EP-A- 0 433 756
- WO-A-91/11885
- US-A- 4 564 102

## Beschreibung

Die Erfindung bezieht sich auf ein Verfahren zur Überwachung und/oder Steuerung eines vorgegebenen Transport- und/oder Verarbeitungsablaufs mittels der Erkennung und Registrierung des Transport- und/oder Verarbeitungs- und/oder Bearbeitungsguts oder des Transportmittels (Objekts) an verschiedenen Stationen.

In Verarbeitungsbetrieben, Distributionsbetrieben und Lagereien gibt es üblicherweise eine Vielzahl von verschiedenen Verarbeitungsstationen (bzw. Bearbeitungsstationen) und Transportstrecken. Je nach Aufgabenstellung und Ausgangsprodukten müssen die verschiedenen Objekte unterschiedliche Stationen und die dazwischenliegenden Transportstrecken durchlaufen. Hierbei muß ein ordnungsgemäßer Ablauf der verschiedenen Verarbeitungs- und Transportschritte sichergestellt werden.

Ein typisches Beispiel für einen Betrieb, in dem diese Problematik in besonderem Maße auftritt, ist ein moderner Schlachthof. Hier gibt es eine Vielzahl verschiedener Verarbeitungsstationen, z. B. Eingangsschlachtwaagen, Abhäutungsstationen, Arbeitsplätze zur Entnahme von Innereien, Wasch- und Reinigungsstationen, Fleischbeschaustellen, Grob- und Feinzerlegestationen usw.. Die angelieferten, getöteten Schlachttiere durchlaufen diese Stationen und die dazwischenliegenden Transportstrecken zu einem großen Teil an Fleischhaken als Transportmittel. In den Zerlegebereichen findet dann häufig der Transport auf Arbeitsbändern statt. Hierbei muß nicht nur sichergestellt werden, daß ein angeliefertes Schlachttier, z. B. ein Rind oder Schwein, alle Verarbeitungsschritte ordnungsgemäß durchläuft, es muß außerdem zu jeder Zeit eine eindeutige Zuordnung der Bearbeitungsprodukte und der Auslieferungsprodukte zu dem jeweils angelieferten Schiachttier gewährleistet sein.

Ein typisches Beispiel für einen Distributionsbetrieb, in dem es auf die richtigen Transportwege innerhalb des Betriebes ankommt, sind Buch- und Zeitschriften-Grossisten. Hier sind täglich tausende von eingehenden Remissionen zu sortieren und den entsprechenden Lägern zuzuführen. Ursprünglich an den Büchern oder Zeitschriften befindliche Markierungen, wie Balkencodes oder dgl., sind zwischenzeitlich häufig entfernt worden oder aufgrund der Beschädigung des Artikels nicht mehr lesbar.

Eine automatische Überwachung und Steuerung solcher Arbeits- und Transportabläufe geschieht häufig durch Bestimmung der jeweiligen Positionen der verschiedenen Transportmittel innerhalb des Betriebes.

Eine Möglichkeit der Überwachung der Transportmittel besteht darin, die Transportmittel mit Sendern zu versehen. Ein solches Verfahren wird in der deutschen Offenlegungsschrift 37 11 237 Al beschrieben. Hierbei wird jeder Transportbehälter mit einem Transponder versehen, der von einer Codiereinheit beliebig oft codiert werden kann und im Bereich einer durch ein Abfragesystem angesteuerten Senderantenne elektromagnetisch angeregt wird und infolge dessen einen bestimmten Code emittiert, welcher wiederum vom Abfragesystem empfangen wird.

Eine ähnliche Lehre ist aus der EP 0 433 756 bekannt. Dort wird einem zu transportierenden Gut eine Kontroll- und Überwachungseinheit fest zugeordnet. In einer solchen Kontroll-Überwachungseinheit, beispielsweise einem Mikroprozessor, können güterspezifische Daten gespeichert werden. Darüber hinaus besteht die Möglichkeit, Sensoren vorzusehen, die aktiv beispielsweise Veränderungen an dem zu transportierenden Gut erfassen und über den Mikroprozessor abspeichern. Eine Weitergabe der Daten kann über normale Schnittstellen mittels Speicherkarten dann erfolgen. Ein solches Verfahren eignet sich insbesondere für das Erfassen von Änderungen, beispielsweise ob bei transportierten Flüssigkeiten diese durch ein Leck austreten.

Eine andere übliche Methode besteht darin, daß an dem Transportmittel oder an dem Transport- oder Verarbeitungsgut selbst Markierungen oder Identifizierungsmittel, wie z. B. Balkencodes, Etiketten mit Klarschriftzeichen, usw., angebracht werden, die an verschiedenen Stationen mit geeigneten Lesevorrichtungen ausgelesen werden.

So beschäftigt sich z. B. die OS-DE 32 05 189 Al mit einer Anordnung zur Erkennung eines Orientierungszeichens als Hilfsmittel bei der automatischen Code-Lesung beim Sortieren von Paketen.

Bei all diesen Verfahren müssen die Transportmittel oder die Transport- oder Verarbeitungsgüter selbst speziell mit Identifizierungsmitteln ausgestattet werden. Diese Identifizierungsmittel unterliegen, wenn es sich um aktive Mittel, wie z. B. Sender bzw. Transponder handelt, dem Verschleiß; bei passiven Identifizierungsmitteln, wie aufgebrachten Etiketten, kommt es häufig dazu, daß diese aufgrund von Verschmutzungen oder teilweisen Beschädigungen od. dgl. nach gewisser Zeit nicht mehr eindeutig oder unter Umständen sogar falsch gelesen werden.

Ein anderes Verfahren für die Überwachung von Transport- oder Verarbeitungsgut ist aus der US 4,564,102 bekannt. Dort sind an einem ringförmig umlaufenden Transportband Arbeitsstationen mit jeweils zugehöriger Kontrollstation vorgesehen. Es ist die Kontrollstation in der Lage, auf dem Transportband einen Transportbehälter, beispielsweise ein Palette, zu erkennen. Weiter sind die Kontrollstationen untereinander für einen Datenaustausch verbunden derart, daß -in Transportrichtung- Informationen weitergegeben werden, in welcher Reihenfolge die Transportbehälter mit Gütern beladen sind. Es kann dann jede Kontrollstation überprüfen, ob die jeweils zugehörige Arbeitsstation hinsichtlich des aktuell durchlaufenden Transportgutes tätig werden soll oder nicht. Es besteht damit eine feste Bindung zwischen dem umlaufenden Transportband und den Transportbehältern und steht synchron damit für die Kontrollstationen die Information zur Verfügung, von Kontrollstation zu Kontrollstation regelmäßig weitergegeben, vergleichbar einem Schieberegister, welches Transportgut sich aktuell in ihrem jeweiligen Kontrollbereich befindet. Es muß jedoch gerade diese feste Bindung auch als nachteilig angesehen werden, da das ganze System zusammenbricht, wenn beispielsweise eine Palette von dem Transportband entfernt wird.

Die WO-A-91/11885 offenbart ein optisches Erkennungsverfahren für die Lageerkennung von willkürlich auf einem Förderband angeordneten, gleichartigen Objekten. Hierfür wird durch die dort vorgesehene elektronische Kamera, ggfls. auch mehrere Kameras, die geeignet mit dem Förderband synchronisiert sind, eine Momentaufnahme von einer Vielzahl dieser auf dem Förderband zufällig angeordneten Objekte vorgenommen. Geeignet digitalisiert und bearbeitet, beispielsweise durch die Zuweisung von Grauwerten, kann so ein digitaler Code für dieses momentane Bild der wahllos auf dem Förderband verteilten Objekte erzeugt werden. Es dient dieser Code als Grundlage für die Berechnung der Positionen der einzelnen Objekte innerhalb dieses Bildes bzw. Fensters. Ist die Position berechnet, kann ein Greifarm exakt positioniert werden für ein Aufnehmen oder Plazieren eines Objektes. Weiter ist für die geeignete Bildbearbeitung sichergestellt, daß nur eine bestimmte Art eines Objektes von dem Band genommen wird. Dies durch die Maßnahme, daß jeder Gegenstand in ein festgelegtes Raster beispielsweise passen muß. Die Lehre dieser Druckschrift zielt auf eine optische Lageerkennung ab, nicht auf eine Überwachung eines individuellen Transport- oder Verarbeitungsgutes beim Durchlauf durch eine Transport- oder Verarbeitungsanlage.

Es ist die Aufgabe der Erfindung, ein Verfahren zur Überwachung und/oder Steuerung eines vorgegebenen Transport- und/oder Verarbeitungsablaufes von Transport- und/oder Verarbeitungsgut zu schaffen, welches ohne speziell an den Transportmitteln oder den Verarbeitungs- oder Transportgut angebrachte Identifizierungsmittel oder Markierungen sicher und zuverlässig arbeitet und problemlos zu installieren ist.

Diese Aufgabe wird erfindungsgemäß durch die kennzeichnenden Verfahrensschritte des Anspruchs 1 gelöst.

Die sich an den ersten Anspruch anschließenden Unteransprüche enthalten vorteilhafte Ausgestaltungen und Weiterentwicklungen der Erfindung.

Mit dem der Erfindung zugrunde liegenden Verfahren lassen sich die verschiedensten Arten von Transport- oder Verarbeitungsgüter oder auch Transportmittel, wie z.B. Transporthaken,, auf Förderbändern laufende Kisten, Fässer, od. dgl. identifizieren.

Da bei dem erfindungsgemäßen Verfahren keinerlei Markierungen od. dgl. an den zu identifizierenden Objekten angebracht werden müssen, ist dieses Verfahren besonders vorteilhaft, wenn es sich um einen offenen Kreislauf von Objekten handelt, also z.B. dann, wenn es im Betrieb keine diskreten Transportmittel, wie Kisten, Haken od. dgl. gibt, denen jeweils die Güter zugeordnet werden können, oder wenn z.B. auch von außen Transportmittel in den Betrieb eingebracht werden und diesen anschließend wieder verlassen.

Die Merkmalscodes von den in die Verarbeitung und Transportablauf eingebrachten Objekte können vom System jeweils neu erfaßt und gespeichert und bei Verlassen des Verarbeitungs- und Transportablaufs wieder gelöscht werden.

Veränderungen der Objekte, wie z.B. eine Zerlegung eines Guts in mehrere Teile oder die Zusammenfassung mehrerer Teile zu einem neuen zusammengesetzten Teil auf dem Verarbeitungsweg können prinzipiell ebenso erfaßt und gespeichert werden.

Ebenso ist es möglich, Typen von Objekten anhand ihrer charakteristischen Merkmale zu sortieren.

Vorteilhafterweise wird das von der elektronischen Kamera aufgenommene Bild zunächst in einem elektronischen Bildspeicher eines Computers in einer Bildpunktmatrix gespeichert.

Auf das in der Bildpunktematrix gespeicherte Bild alle Arten von Bildverarbeitungsroutine und -operatoren anwendbar. Ein Laplace-Operator bewirkt z.B. eine Kantenversteilung und eine höhere Bildschärfe, Mittelwertoperatoren bewirken eine Glättung auf Kosten der Bildschärfe, Medienoperatoren bewirken eine kantenerhaltende Glättung. Mit Zoom-Operatoren lassen sich bestimmte Details vergrößern.

Das Bild eines jeden Objekts weist in für eine Identifizierung des Objekts eindeutiger Weise charakteristische Merkmale auf, welche mit einem Bildverarbeitungsprogramm ermittelbar und in einem Merkmalscode zusammenfaßbar sind. Solche Merkmale sind z.B. Form und Außenmaße des Objekts, Kanten, Vertiefungen, Erhebungen, Löcher, Kratzer, Aufdrucke od. dgl.. Anhand dieser Merkmale ist eine eindeutige Identifizierung und Wiedererkennung von Objekten, ähnlich der Personenidentifizierung anhand des Fingerabdruckes, möglich. Die Lage und Abmessung der Merkmale können im Raster der Bildpunktematrix zueinander bestimmt werden.

Für einen Vergleich der Objekte wird vorteilhafterweise nach vorbestimmbaren Kriterien durch Umsortierung oder Umadressierung der Bildpunkte im Raster der Bildpunktematrix eine Lagenormierung des jeweiligen Bildes mit dem Bildverarbeitungsprogramm vorgenommen. Es ist weiterhin von Vorteil, in dem lagenormierten Bild einen nach Höhe und Breite normierten Bildbereich auszuwählen oder einen Ausschnitt des Bildes, welcher das zu identifizierende Objekt oder einen vorbestimmten Teil desselben abbildet, auf eine vorgegebene Größe zu transformieren.

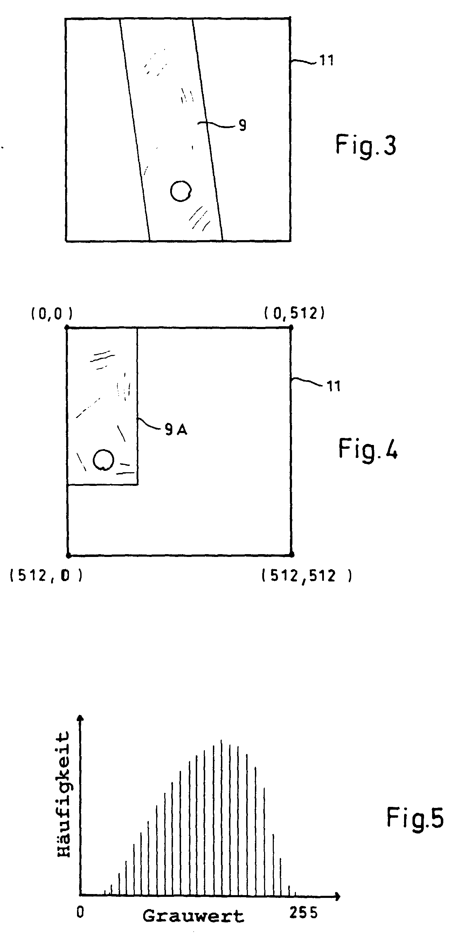

Vorzugsweise wird mit dem normierten Bildbereich eine Grauwertanalyse vorgenommen, wobei zunächst die Grauwerte der einzelnen Bildpunkte ermittelt und in einer Grauwertematrix gespeichert werden. Zusätzlich kann ein Grauwert-Histogramm (vgl. Fig. 5) erstellt werden.

Die Grauwerte der einzelnen Bildpunkte sind bezüglich eines vorgebbaren Wertes normierbar. Damit können jeweils unterschiedliche Lichtverhältnisse berücksichtigt werden.

Der Merkmalscode eines jeden Objekts besteht aus verschiedenen Merkmalssätzen. Welche Merkmalssätze jeweils ermittelt und für eine Identifizierung verwendet werden, ist abhängig von der speziellen Art der Objekte, von der speziellen Aufgabenstellung (Sortierung von bekannten Typen von Objekten, Identifizierung von im Betriebsablauf sich verändernden Objekten etc.), von zeitlichen Vorgaben, wie z.B. der Identifizierungsgeschwindigkeit und vom Schwierigkeitsgrad der Objekte.

So können z.B. die Lagekoordinaten und Abmessungen der primären Bildbestandteile, d.h. die Merkmale der Objekte, wie Form und Ausmaße, Kanten, Vertiefungen etc., in einem Merkmalssatz (A1, A2, ...) zusammengefaßt sein. Weiterhin ist es möglich, aus dem Grauwert-Histogramm Grauwertverteilungsparameter, wie den aritmethrischen Mittelwert, den quadratischen Mittelwert, die Varianz, die Halbwertsbreite, die Kurtosis od. dgl. zu ermitteln und in einem weiteren Merkmalssatz (B1, B2, ...) zusammenzufassen.

Mit der Grauwertverteilung kann zudem eine Fourieranalyse durchgeführt werden und die daraus gewonnen Fourier-Koeffizienten in einem weiteren Merkmalssatz (C1, C2, ...) zusammengefaßt werden.

Bei einer weiteren vorteilhaften Methode wird das Bild zunächst in eine Gradientendarstellung transformiert, in der jeder Bildpunkt durch den an dieser Stelle auftretenden Gradienten ersetzt wird. In dieser Darstellung werden dann die das abgebildete Objekt charakterisierenden Merkmale mit den jeweils stärksten Gradienten bis zu einer vorgegebenen Anzahl von Merkmalen ermittelt. Anschließend wird die Gradientendarstellung in eine bezüglich eines Schwellwertes diskriminierte Darstellung umgewandelt und gespeichert. Der Schwellwert liegt dabei unter dem niedrigsten Gradientenwert der zuvor ermittelten Merkmale. Als Ergebnis liegt dann ein "Schwarzweiß"-Bild als Merkmalssatz in Matrixdarstellung vor, bei dem nur noch die stärksten charakterisierten Merkmale vorhanden sind. Auf diese Weise läßt sich der Speicherplatzbedarf eines Bildes erheblich reduzieren, wobei dieses Bild dann nur noch die wichtigen Informationen, nämlich den "Fingerabdruck" des Objekts enthält.

Um auch trotz geringfügiger eventueller Veränderungen im "Fingerabdruck" ein Objekt noch wiedererkennen zu können, ist es vorteilhaft, die zu vergleichenden Schwarzweiß-Bilder etwas zu verwischen, d.h. unschärfer zu machen. Dies geschieht idealerweise dadurch, daß vor der Erzeugung der Gradientendarstellung der Grauwert jedes Bildpunkts durch den Median der Grauwerte des Bildpunktes selbst und der in einer vorgegebenen Umgebung des Bildpunkts liegenden Bildpunkte ersetzt wird. Eine andere Möglichkeit besteht darin, das Bild vor der Erzeugung der Gradientendarstellung mit einem Unschärfe-Filter zu behandeln, welcher die diskreten Grauwerte an den einzelnen Bildpunkten durch Gaußverteilung mit einer vorgegebenen Breite ersetzt und daraus ein neues, unschärferes Grauwert-Bild erzeugt. Dieser Verfahrensschritt kann auch vor der Diskriminierung bezüglich eines Schwellwerts mit der Gradientendarstellung vorgenommen werden.

Eine weitere einfache Methode, welche allerdings keine definierte Unschärfe erzeugt, besteht darin, einfach bei der Aufnahme der Bilder mit der Kamera das Objektiv etwas unscharf zu stellen.

Für die verschiedenen Arten von Merkmalssätzen unterschiedliche Mindestübereinstimmungsverhältnisse (WA, WB, WC, ...) festlegbar, die bei einem Vergleich zur Identifizierung überschritten sein müssen.

Vorteilhafterweise werden die Objekte vor dem Eintritt in den Verarbeitungs- oder Transportablauf zunächst mit einer elektronischen Kamera an eine Eingangsstation aufgenommen und die entsprechenden Daten in einer zentralen Datenbank gespeichert. Mit dieser zentralen Datenbank sind alle weiteren Computer der einzelnen Beobachtungsstationen und ein Zentralcomputer vernetzt.

In dem Zentralcomputer kann z.B. ein Verarbeitungs- oder Transportablaufplan gespeichert sein, welcher festlegt, welches Objekt welche Station wann durchlaufen soll.

Sollen z.B. Typen von Objekten anhand ihrer (bekannten) charakteristischen Merkmale sortiert werden, so kann in der zentralen Datenbank des Zentralcomputers auch eine Bibliothek von Merkmalen von Objekten oder auch von ganzen Objektbildern angelegt sein.

Entstehen im Verarbeitungsprozeß neue Objekte, können die Merkmalscodes dieser Objekte oder die Erwartungswerte für solche Merkmalscodes in der zentralen Datenbank oder auch in den Zellen eines vom Zentralcomputer simulierten neuronalen Netzes gespeichert werden. In den Erwartungswerten dieser neuen Objekte kann z.B. die äußere Kontur und die davon eingeschlossene Fläche für verschiedene Blickrichtungen enthalten sein. Damit wird der Tatsache Rechnung betragen, daß die Objekte mit unterschiedlicher Orientierung an der Kontrollstation vorbeilaufen. Neben den Angaben über die zu erwartende Konturengröße eines jeweiligen Objekts sind auch Erwartungswerte bezüglich der Farbzusammensetzung, bzw. der Helligkeitsvariationen der Oberfläche vorgesehen.

Es ist weiterhin vorteilhaft, wenn in den Merkmalscode eines jeden Objekts der Zeitpunkt der Registrierung an der Eingangsstation aufgenommen wird. Anhand des gespeicherten Ablaufplans und der jeweiligen Eintrittszeiten der jeweiligen Objekte in den Verarbeitungs- oder Transportablauf und unter Berücksichtigung der Transport-und Verarbeitungszeiten ist dann vorherberechenbar, welche Objekte in bestimmten Zeitintervallen an jeweils einer bestimmten Kontrollstation mit einer gewissen Wahrscheinlichkeit zu erwarten sind. Zur Identifizierung eines Objekts werden dann an der jeweiligen Kontrollstation zuerst nur die Merkmalscodes dieser bestimmten Gruppe von Objekten für einen Übereinstimmungsvergleich herangezogen. Dadurch kann die Wiedererkennungszeit deutlich reduziert werden.

Die Kontrollstationen melden dem Zentralcomputer, welches der Objekte eine bestimmte Verarbeitungsstation oder Transportstrecke erreicht bzw. durchlaufen hat. Diese Daten können im Zentralcomputer anhand des gespeicherten Ablaufplanes überprüft werden, außerdem können von hier aus für die Beförderung des Objekts zur jeweils nächsten Verarbeitungsstation oder Transportportstrecke die entsprechenden Weichen gestellt werden.

Vor Verlassen des Transport- oder Verarbeitungsbereiches werden die Objekte vorteilhafterweise noch einmal an einer Ausgangsstation mit einer elektronischen Kamera aufgenommen. Diese meldet dem Zentralcomputer die ausgehenden Objekte zur Kontrolle. Es kann dann eine Auftragsabschlußmeldung ausgegeben werden und eventuell der Merkmalscode des Objekts aus der zentralen Datenbank entfernt werden. Gegebenenfalls kann dann ein Gerät angesteuert werden, welches jedes ausgehende Objekt mit einem Identifizierungs- und Herkunftsnachweis versieht. Dies können z.B. am Zentralcomputer ansteuerbare Etikettendrucker sein, welche für jedes zur Weitergabe bzw. Auslieferung bestimmte Objekt ein Identifizierungs- und Herkunftsetikett drucken, das auf das Objekt aufgeklebt wird.

Zur optimalen Nutzung der Rechnerkapazitäten ist es vorteilhaft, wenn jeweils an den einzelnen Stationen objektsignalisierende Initiatoren, wie eine Lichtschranke, mechanische oder induktive Kontaktschalter angeordnet sind, welche genau dann, wenn sich ein Objekt im Bildbereich der entsprechenden Kamera befindet, ein Auslösesignal für die Kamera abgeben, so daß nur in diesem Fall auch ein digitales Bild aufgenommen und gespeichert wird. Eine unnötige Auswertung von Bildern, welche keine Objekte enthalten, wird dadurch vermieden.

Bei der Kontrolle und Steuerung von Arbeitsabläufen, z.B. auf einem Fließband, können ganze Kontrollgebiete durch Vereinigung von unmittelbar aneinandergrenzenden oder sich überlappenden Bildbereichen verschiedener Kameras gebildet werden. Diese können wiederum in unmittelbar aneinandergrenzende oder sich überlappende Kontrollfelder eingeteilt sein. Hierbei kann jeweils ein Kontrollfeld dem Bildbereich einer Kamera entsprechen, dies ist aber nicht zwingend notwendig. Auf diese Weise ist auch eine Verfolgung der Objekte und deren Verarbeitung in einem größeren Bereich möglich. Selbstverständlich kann auch, falls das gewünscht ist, der von einer Kamera einsehbare Bildbereich bei der Auswertung in mehrere Kontrollfelder eingeteilt werden.

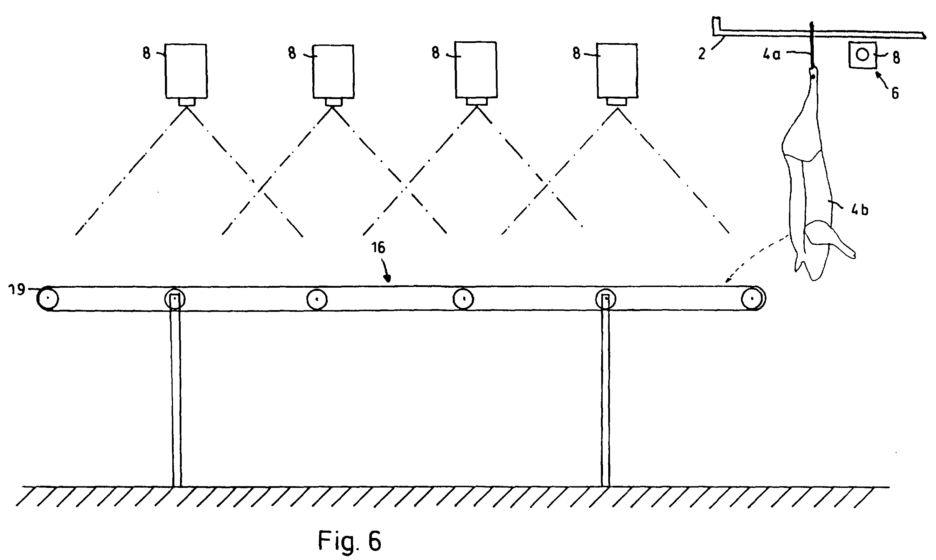

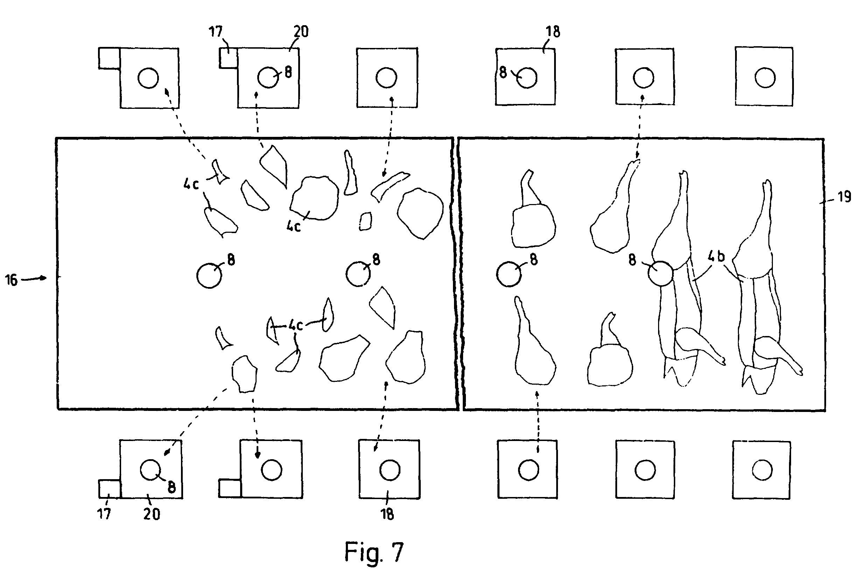

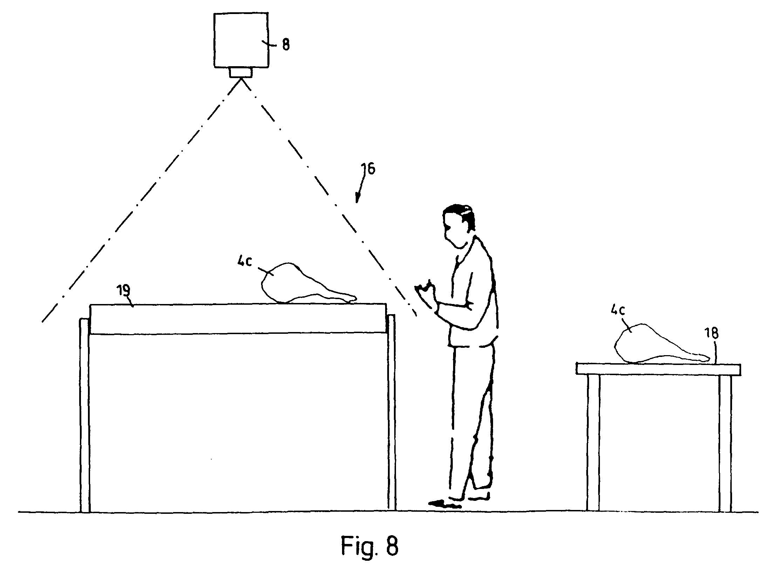

Anhand der Figuren 1 bis 8 wird die Erfindung am Beispiel eines Einsatzes in einem Schlachthof nachfolgend näher erläutert. Es zeigt:
- Fig. 1: eine schematische Übersicht über einen Schlachthof,
- Fig. 1A: eine Kontrollstation mit einem Fleischhaken in der Seitenansicht und einer auf diesen gerichteten Kamera und einer Lichtschranke als Auslöseinitiator für die Kamera,
- Fig. 2: eine Rückenansicht eines Fleischhakens aus der Blickrichtung der Kamera,
- Fig. 3: eine Bildpunktematrix mit Ausschnittbild eines Fleischhakens, wobei die Auflösung in einzelne Bildpunkte nicht dargestellt ist,
- Fig. 4: eine Bildpunktematrix mit einem normierten Bildbereich des Fleischhakens,
- Fig. 5: ein Grauwert-Histogramm des normierten Bildbereiches,
- Fig. 6: eine Seitenansicht einer Transportstrecke mit einem daran hängenden Schlachtkörper sowie ein Zerlegeband mit darüber angeordneten Kameras,
- Fig. 7: eine Draufsicht auf das Zerlegeband mit den darauf verteilt liegenden Schlachtkörpern und Teilstücken,
- Fig. 8: eine Seitenansicht des Zerlegebandes mit darüber angeordneter Kamera und benachbartem Zerlegeplatz.

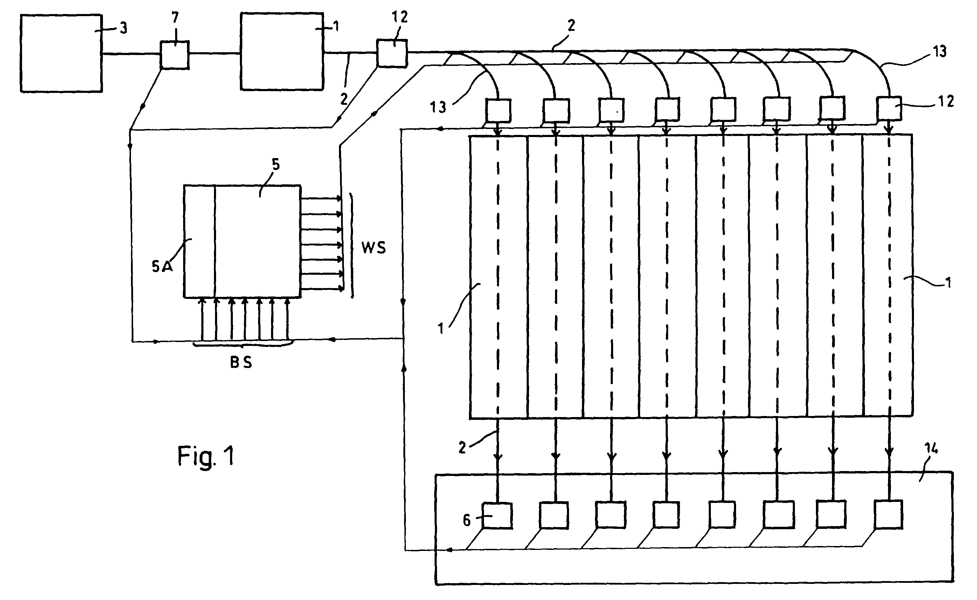

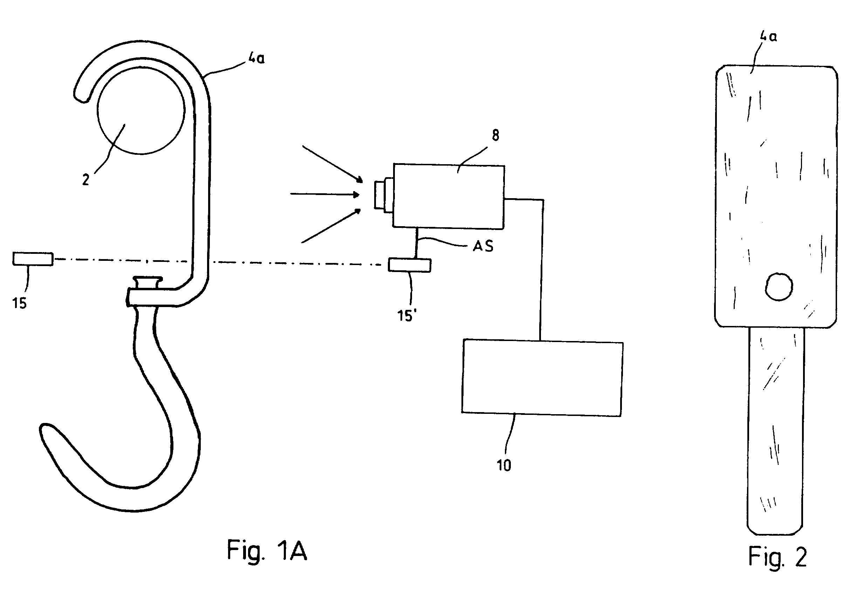

Fig. 1 zeigt eine schematische Übersicht eines Schlachthofes. In dem Schlachthof gibt es eine Vielzahl von verschiedenen Verarbeitungsstationen (1) und Transportstrecken (2). Die angelieferten Schlachttiere werden in einer ersten Station (3) getötet, dann auf einen Fleischhaken (4a) als Transportmittel gehängt, zu einer Eingangsschlachtwaage und anschließend weiter zu den einzelnen Verarbeitungsstationen (1) transportiert, z. B. Abhäutungsstationen, Arbeitsplätze zur Entnahme der Innereien, Wasch- und Reinigungsstationen, Fleischbeschaustellen, Grob- und Feinzerlegungsstationen usw..

Vor dem Eintritt in den Verarbeitungsablauf, z. B. nach der Tötungsstation (3), wird jeder Fleischhaken (4a) mit dem daran hängender Schlachttier registriert und eine Auftragsnummer bzw. Fleischhakennummer vergeben. In einem Verarbeitungs-Ablaufplan, welcher in einem Zentralcomputer gespeichert ist, wird die entsprechende Eingangszeit aufgenommen und festgelegt, welche Verarbeitungsstationen ein Fleischhaken mit dem daran hängenden Schlachttier zu durchlaufen hat und an welcher Ausgangsstation er den Schlachthof verlassen soll.

In dem folgenden Diagramm ist ein Ausschnitt aus einem solchen Verarbeitungs-Ablaufplan dargestellt:

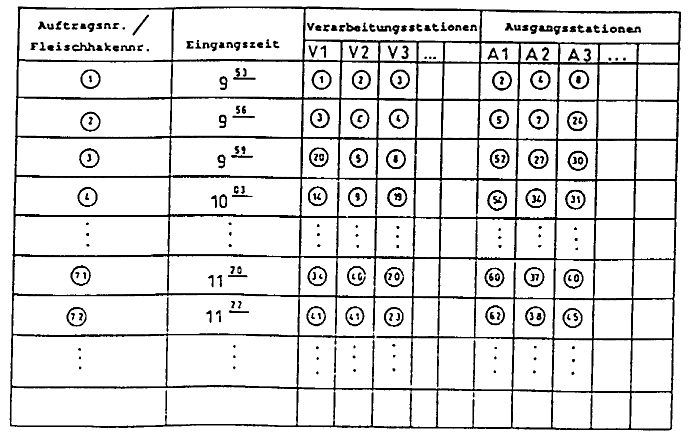

Die Registrierung eines in den Schlachthof eingebrachten Fleischhakens (4a) erfolgt in einer Eingangsstation (7). Dort wird mit einer ersten elektronischen Kamera (8) ein digitales Ausschnittbild (9) - vgl. Fig. 1A und Fig. 3 - aufgenommen und in einem elektronischen Bildspeicher eines Computers (10) in einer Bildpunktematrix (11) gespeichert. In Fig. 4 ist eine Bildpunktematrix (11), bestehend aus 512 x 512 Pixeln dargestellt.

Die Bildaufnahmematrix (11) kann jedoch auch mehr oder weniger Bildpunkte (Pixel) umfassen, z. B. 256 x 256 oder 1024 x 1024. Das Ausschnittbild (9) eines jeden Fleischhakens (4a) weist in für eine Identifizierung des Fleischhakens (4a) eindeutiger Weise charakteristische Merkmale auf, welche mit einem Bildverarbeitungsprogramm ermittelbar und in einem Merkmalscode zusammengefaßt sind. Der Merkmalscode eines jeden Fleischhakens (4a) wird in einer zentralen Datenbank (5A) gespeichert. Charakteristische Merkmale sind z. B. Kanten, Vertiefungen, Erhebungen, Kratzer, Löcher, od. dgl.. Anhand dieser Merkmale ist eine eindeutige Identifizierung möglich.

Mit einem Bildverarbeitungsprogramm werden zur Identifizierung und Wiedererkennung des jeweiligen Fleischhakens (4a) im Ausschnittbild (9) Kanten, Vertiefungen, Erhebungen und/oder Löcher ermittelt und deren Lage und Abmessungen im Raster der Bildpunktematrix (11) und zueinander bestimmt.

Nach vorbestimmten Kriterien wird durch Umsortierung oder Umadressierung der Bildpunkte im Raster der Bildpunktematrix (11) eine Lagenormierung des jeweiligen Ausschnittbildes (9) mit einem Bildverarbeitungsprogramm vorgenommen. In dem lagenormierten Ausschnittbild (9) wird dann ein nach Höhe und Breite normierter Bildbereich (9A) ausgewählt.

Mit dem normierten Bildbereich (9A) wird eine Grauwertanalyse vorgenomen, wobei die Grauwerte der einzelnen Bildpunkte ermittelt und in einer Grauwertematrix gespeichert werden.

Ein solches Bild umfaßt 4096 Byte. Dann wird zunächst der Grauwert jedes Bildpunktes durch den Median der Grauwerte des Bildpunktes und der in einer vorgegebenen Umgebung des Bildpunktes liegenden Bildpunkte ersetzt. Anschließend wird das Bild in eine Gradientendarstellung transformiert, d.h. es wird der einzelne Bildpunktwert durch einen dem Gradienten an dieser Stelle entsprechenden Wert ersetzt. In dieser Gradienten-Darstellung werden die das abgebildete Objekt am stärksten charakterisierenden Merkmale, d.h. die Merkmale mit den jeweilig stärksten Gradienten, bis zu einer vorgegebenen Anzahl von Merkmalen ermittelt. Als ausreichend hat sich hier eine Anzahl von ca. 800 Merkmalen erwiesen. Danach wird das Bild in der Gradienten-Darstellung mit einem (mathematischen) Unschärfefilter behandelt, wodurch die Konturen der charakterisierenden Merkmale verwischt werden. Zuletzt wird schließlich die Gradienten-Darstellung in eine bezüglich eines Schwellwerts diskriminierte Darstellung umgewandelt und gespeichert. Hierbei liegt der Schwellwert unter dem niedrigsten Gradientenwert der zuvor ermittelten Merkmale.

Als Ergebnis erhält man dann ein Schwarzweiß-Bild, in dem lediglich die charakterisierenden Merkmale hervortreten. Das Bild hat dann noch einen Speicherbedarf von 512 Byte. Dieser "Fingerabdruck" des Objekts wird dann als Merkmalssatz gespeichert.

Die Konturenverwischung durch Bildung des Medians bzw. durch Aufsetzen des Unschärfe-Filters erfolgt, um auch bei geringfügig veränderten "Fingerabdrücken" die passenden Objekte noch einordnen zu können.

Anstelle der recht aufwendigen mathematischen Konturenverwischung kann prinzipiell auch vor der Aufnahme des Bildes das Objektiv der Kamera etwas unscharf gestellt werden. Hierdurch erhält das Verfahren zwar eine gewisse Unsicherheit, auf der anderen Seite steht dem jedoch ein erheblicher Zeitgewinn gegenüber. Anschließend wird, wie zuvor im Beispiel der Fleischhakenerkennung beschrieben, ein "Schwarzweiß-Fingerabdruck" des Bildes als der wesentliche Merkmalssatz des Objekts erzeugt. Dieses Bild wird dann bitweise mit allen in Frage kommenden gespeicherten Bildern verglichen und das Bild mit der größten Übereinstimmung gesucht. Die Zeit, die für die Identifizierung eines Buches nötig ist, kann bei diesem Verfahren unter 100 ms liegen.

Nach erfolgter Identifizierung des Buches werden dann vom Computer entsprechende Weichen gesetzt, damit das Buch in den gewünschten Lagerbereich gelangt. Gleichzeitig werden die entsprechenden Informationen an die Lagerbuchhaltung usw. weitergegeben.

Vor und/oder nach den jeweiligen Verarbeitungsstationen (1) oder Transportstrecken (2) wird an Kontrollstationen (12) von dem jeweiligen Fleischhaken (4a) mit je einer weiteren elektronischen Kamera (8) ein digitales Ausschnittbild (9) aufgenommen und in einem digitalen Bildspeicher eines Computers (10) in einer Bildpunktematrix (11) gespeichert. Dort wird das Ausschnittbild (9) zur Wiedererkennung des jeweiligen Fleischhakens (4a) mit einem Bildverarbeitungsprogramm wie oben beschrieben analysiert und mit den in der zentralen Datenbank (5A) gespeicherten Merkmalscodes verglichen.

Die Identifizierung erfolgt hierbei im wesentlichen durch bit-weisen Vergleich der als matrixförmige Merkmalssätze abgespeicherten "Schwarzweiß-Fingerabdrücke". Es wird das Bild des zu identifizierenden Hakens (4a) jeweils mit allen anderen Bildern von in Frage kommenden im Umlauf befindlichen Haken (4a) verglichen, und dabei nach dem Haken (4a) mit der größten Übereinstimmung gesucht. Hierbei muß jedoch eine bestimmte Mindestübereinstimmung erreicht werden. Die Mindestübereinstimmungsschwelle kann je nach Erfordernissen des Betriebes gewählt werden. Ein günstiger Wert liegt bei einer Übereinstimmung von 60 %.

Weitere Merkmalssätze (z.B. Zeitpunkt einer vorherigen bzw. eingangsseitigen Registrierung) werden bei Bedarf zu einem Vergleich herangezogen, um die Anzahl der zu vergleichenden "Schwarzweiß-Bilder" einzuschränken. So wird z.B. anhand des Verarbeitungs-Ablaufplanes und der jeweiligen Eintrittszeiten der Fleischhaken (4a) in den Verarbeitungsablauf und unter Berücksichtigung von Transport- und Verarbeitungszeiten vorherberechnet, welche Fleischhaken (4a) in bestimmten Zeitintervallen an jeweils einer bestimmten Kontroll- oder Ausgangsstation (6, 12) mit einer gewissen Wahrscheinlichkeit sind. Zur Identifizierung eines Fleischhakens (4a) werden an der jeweiligen Kontroll- oder Ausgangsstation (6, 12) zuerst nur die Merkmalscodes dieser Gruppe von Transportmitteln (4) für einen Übereinstimmungsvergleich herangezogen. Dadurch wird die Wiedererkennungszeit deutlich reduziert.

Anschließend wird dem Zentralcomputer (5) gemeldet, welcher der Fleischhaken (4a) die jeweilige Verarbeitungsstation (1) oder Transportstrecke (2) erreicht bzw. durchlaufen hat. Anhand des im Zentralcomputer (5) gespeicherten Verarbeitungs-Ablaufplanes wird überprüft, ob der identifizierte Fleischhaken (4a) richtigerweise an dieser Kontrollstation (12) ist. Für die Beförderung des Fleischhakens (4a) zur jeweils nächsten Verarbeitungsstation (1) oder Transportstrecke (2) wird ggf. eine Weiche (13) gestellt.

An Auslieferungsrampen (14) des Schlachthofes befinden sich Ausgangsstationen (6), in denen mit jeweils einer weiteren elektronischen Kamera (8) von dem jeweiligen Fleischhaken (4a) ein digitales Ausschnittbild (9) aufgenommen und in einem elektronischen Bildspeicher eines Computers (10) gespeichert wird. Zur Wiedererkennung des Fleischhakens (4a) wird das Ausschnittbild (9) mit einem Bildverarbeitungsprogramm analysiert und mit den in der zentralen Datenbank (5A) gespeicherten Merkmalscodes verglichen. Dabei wird dem Zentralcomputer (5) gemeldet, welcher der Fleischhaken (4a) die jeweilige Ausgangsstation (6) erreicht hat. Anhand des Verarbeitungs-Ablaufplanes wird überprüft, ob der identifizierte Fleischhaken (4a) richtigerweise an der entsprechenden Ausgangsstation (6) ist, ggf. wird eine Auftragsabschlußmeldung od. dgl. gegeben und der Merkmalscode dieses Fleischhakens (4a) aus der zentralen Datenbank (5A) entfernt.

An den Eingangsstationen (7), Kontrollstationen (12) und den Ausgangsstationen (6) ist jeweils ein Initiator, vorzugsweise eine Lichtschranke (15, 15') angeordnet, welche Fleischhaken (4a) signalisiert und ein Auslösesignal (AS) für die entsprechende Kamera (8) gibt, damit diese ein digitales Ausschnittbild (9) des signalisierten Fleischhakens (4a) aufnimmt und abspeichert. Außerdem wird der jeweilige Zeitpunkt der Registrierung an den Zentralcomputer (5) gemeldet und eventuell in ein Auftragsprotokoll aufgenommen. Statt einer Lichtschranke (15, 15') kann der Initiator auch von einem mechanischen oder induktiven Kontaktschalter gebildet sein.

In einer alternativen Ausführungsform werden von den jeweiligen Kameras (3) in periodisch aufeinanderfolgenden Zeitabständen, die wesentlich kürzer sind als die Durchlaufzeiten der Fleischhaken (4a) durch die Kontrollstationen (12), Bilder aufgenommen und jeweils eine grobe Zeilen- bzw. Spaltrasterung vorgenommen, um zu ermitteln, ob ein Fleischhaken (4a) sich im Bild befindet oder nicht. Falls sich das Ausschnittbild (9) eines Fleischhakens (4a) im Bild befindet, erfolgt eine Abspeicherung für eine weitere Bildanalyse.

Der Zentralcomputer (5), die zentrale Datenbank (5A) und alle weiteren Computer (10) sind miteinander vernetzt.

Auf den Zentralcomputer (5) sind die Bildsignale (BS) der Eingangs-, Kontroll- und Ausgangsstationen geführt. Von dem Zentralcomputer (5) werden die Weichensignale (WS) gesetzt.

Bis zum Zerlegebereich (16) werden die einzelnen Schlachtkörper (4b) über Transportschienen (2) an Fleischhaken (4a) hängend zum Zerlegebereich (16) transportiert. Dabei ist mit Hilfe des erfindungsgemäßen Verfahrens bekannt, welcher Schlachtkörper (4b) an welchem Fleischhaken (4a) hängt.

Beim Eintreffen am Zerlegebereich (16) wird von der Ausgangstation (6) der Fleischhaken-Überwachung eine entsprechende Identifikationsstartadresse an den Auswertecomputer (5) übergeben; vorteilhafterweise wird gleichzeitig die Ankunfts- bzw. Startzeit mit abgespeichert.

Der Zerlegebereich (16) besteht aus einem Zerlegeband (19) und mehreren Zerlegearbeitsplätzen (18). Die Schlachtkörper (4b) werden von der Transportstrecke (2) auf das Zerlegeband (19) gelegt, an dem zu beiden Seiten mehrere Personen stehen, die den Schlachtkörper (4a) direkt auf dem Zerlegeband (19) oder auf benachbarten Zerlegearbeitsplätzen (18) in seine Teilstücke (4c) zerlegen.

Teilstücke (4c), die nicht weiter zerlegt werden müssen, werden an Weitergabe- bzw. Auslieferungsstationen (20) für den weitertransport in Kisten gepackt oder an sogenannten Teilstücktannenbäumen befestigt.

Über dem Zerlegebereich sind mehrere auf das Zerlegeband (19), die Zerlegearbeitsplätze (18) und die Weitergabe- bzw. Auslieferungsstationen (20) gerichtete elektronische Kameras (8) zur Erkennung und Identifizierung der Schlachtkörper (4b) und Ihrer Teilstücke (4c) angeordnet. Die Kameras (8) erfassen zusammengenommen mit ihren einstellbaren Bildbereichen den gesamten Zerlegebereich. Der Zerlegebereich ist in einzelne, unmittelbar aneinander angrenzende oder sich teilweise überlappende Kontrollfelder eingeteilt, wobei jedem Kontrollfeld der Bildbereich einer Kamera (8) zugeordnet ist. Alle Kameras (8) sind an einen Zentralcomputer (5) angeschlossen. An den Weitergabe- bzw. Auslieferungsstationen (20) sind jeweils vom Zentralcomputer (5) ansteuerbare Etikettendrucker (17) vorgesehen, welche für jedes zur Weitergabe- bzw. Auslieferung bestimmte Teilstück (4c) ein Identifizierungs- und Herkunftsetikett drucken. Bei diesen Etiketten handelt es sich vorzugsweise um Kollagen-Etiketten, die das Fleisch im Bereich der Klebefläche nicht nachteilig verändern.

Mit den Kameras (8) über dem Zerlegebereich werden laufend digitale Bilder der Kontrollfelder mit den in diesen Bereichen befindlichen Schlachtkörpern (4b) und/oder Teilstücken (4c) aufgenommen. Diese Bilder werden in einem elektronischen Bildspeicher des Zentralcomputers (5) in Bildpunktematrizen gespeichert, wobei jeder Schlachtkörper (4b) und jedes Teilstück (4c) in für eine Identifizierung eindeutiger Weise charakteristische Merkmale aufweist, welche mit einem Bildverarbeitungsprogramm ermittelbar und in einem Merkmalscode zusammengefaßt sind.

In dem Auswertecomputer ist ein neuronales Netz simuliert, wobei in den Zellen des neuronalen Netzes für jeden Schlachtkörper (4b) und jedes im Zerlegeverfahren entstehende Teilstück (4c) Erwartungswerte definierbar sind. Die mit dem Bildverarbeitungsprogramm ermittelten Merkmale eines Teilstückes (4c) werden dann jeweils mit den Erwartungswerten zur Identifizierung verglichen. Dem jeweiligen Teilstück (4c) wird dann eine entsprechende Identifikationsadresse zugeordnet.

Für jedes der im Zerlegeverfahren sukzessive entstehenden Teilstückes (4c) sind mehrere Erwartungswerte für die äußere Kontur und die davon eingeschlossene Fläche für verschiedene Blickrichtungen definiert. Außerdem sind Erwartungswerte für die Farbzusammensetzung der Teilstückoberfläche vorgesehen. In den Erwartungswerten ist auch die Reihenfolge der Zerlegung berücksichtigt. Zu Identifizierung und Nachweiskontrolle für ein Teilstück (4c) wird eine Korrelation zwischen den mit dem Bildverarbeitungsprogramm aus den aufgenommenen Bildern ermittelten Merkmalen und den Erwartungswerten des neuronalen Netzes vorgenommen.

Mit diesem erfindungsgemäßen Identifikations- und Kontrollsystem wird die Lücke im Zerlegebereich in der Nachweiskette vom landwirtschaftlichen Erzeugerbetrieb bis zum Supermarkt geschlossen. Eine Beeinträchtigung des normalen Zerlegebetriebes erfolgt nicht.

Im folgenden wird noch als ein weiteres Beispiel ein Einsatz des erfindungsgemäßen Verfahrens bei der Sortierung der Remissionen in einem Buchgrosso-Betrieb erläutert. Dieser Einsatz ist nicht in Figuren dargestellt.

Grossisten bekommen häufig täglich bis zu mehreren tausend Büchern aufgrund von Fehlbestellungen oder Beschädigungen od. dgl. von ihren Buchhändlern zurückgeschickt. Zur Wiedereinlagerung der Bücher müssen diese zunächst sortiert und zu den entsprechenden Lagerstellen gebracht werden.

Hierzu werden die Bücher zunächst einmal auf ein Laufband gelegt. Über diesem Laufband ist eine Kamera montiert, welche von dem Buch ein Bild aufnimmt, welches dann digitalisiert und ausgewertet wird. Hierzu sind die charakteristischen Merkmale aller möglichen Bücher in einer zentralen Datenbank wie in einer Bibliothek gespeichert.

Um Zeit zu sparen, wird im vorliegenden Fall dafür gesorgt, daß die Bücher sich in einer bestimmten Lage auf dem Transportband befinden. Dies ist jedoch keineswegs zwingend notwendig, da prinzipiell auch eine Umorientierung bei der Auswertung möglich ist.

Es wird dann zunächst aufgrund der Bildinformationen die Höhe und Breite des abgebildeten Buches ermittelt. Hierdurch ist eine erhebliche Reduzierung der für die Identifizierung notwendigen Suchschritte in der Bibliothek möglich. Bei einer Gesamtzahl von 60000 möglichen Büchern läßt sich so z.B. die Anzahl der pro Buch zu durchsuchenden Datensäte auf unter 2000 reduzieren.

Der Bildausschnitt, welcher das Buch enthält, wird dann auf eine vorgegebene Größe transformiert. Das aufgenommene Objekt Bild wird dann in einer Bildpunkmatrix als Grauwert-Darstellung gespeichert.

## Patentansprüche

1. Verfahren zur Überwachung und/oder Steuerung eines vorgegebenen Transport- und/oder Verarbeitungsablaufs mittels der individuellen Registrierung vor und der späteren Erkennung während des Ablaufs eines jeden Transport- und/oder Verarbeitungs- und/oder Bearbeitungsgutes oder dessen, es während des Ablaufs haltenden Transportvorrichtung wie Haken, Kisten oder dergleichen als Objekt an verschiedenen Stationen, dadurch gekennzeichnet,
- daß von einem jeden vereinzelten Objekt zumindest ausschnittsweise ein Bild durch eine elektronische Kamera aufgenommen wird, bevor das Objekt den Transport- und/oder Verarbeitungsablauf durchläuft,
- daß von einem Bildverarbeitungsprogramm aus dem aufgenommenen und digitalisierten Bild die das Objekt (4) in eindeutiger Weise charakterisierenden Merkmale der originären Oberfläche und/oder Gestalt des Objektes, insbesondere individuelle Kanten, Vertiefungen, Erhebungen, Löcher und/oder Helligkeit und/oder Farbschwankungen, Formen und Abmessungen des Objektes (4), extrahiert werden,
- daß die extrahierten Merkmale in einem das Objekt individualisierenden Merkmalscode zusammengefaßt und zur Registrierung des Objekts (4) abgespeichert werden,
- daß während des Transport- und/oder Verarbeitungsablaufes von einem jeden einzelnen Objekt (4) ein weiteres Bild von wenigstens einer weiteren elektronischen Kamera (8) einer Kontrollstation (12) aufgenommen wird,
- daß von einem Bildverarbeitungsprogramm aus jedem der weiteren aufgenommenen und digitalisierten Bildern erneut die ein jedes Objekt (4) in eindeutiger Weise charakterisierenden Merkmale extrahiert werden,
- daß diese extrahierten Merkmale für jedes Objekt in einem weiteren, dieses Objekt individualisierenden Merkmalscode zusammengefaßt werden und
- daß durch Vergleich dieser weiteren individualisierenden Merkmalscodes mit den abgespeicherten individualisierenden Merkmalcodes ein jedes der Objekte während des Transport- und/oder Verarbeitungsablaufs identifizierbar ist.

2. Verfahren nach Anspruch 1, dadurch gekennzeichnet, daß das von der elektronischen Kamera (8) aufgenommene Bild (9) des jeweiligen Objekts (4) in einem elektronischen Bildspeicher eines Computers (10) in einer Bildpunktematrix (11) gespeichert wird und daß die Lage, Abmessungen oder dergleichen der charakteristischen Merkmale des Objekts (4) im Raster der Bildpunktmatrix (11) und zueinander bestimmt werden.

3. Verfahren nach einem der vorstehenden Ansprüche, dadurch gekennzeichnet, daß nach vorbestimmbaren Kriterien durch Umsortieren oder Umadressierung der Bildpunkte im Raster der Bildpunktematrix (11) eine Lagenormierung des jeweiligen Bildes (9) mit dem Bildverarbeitungsprogramm vorgenommen wird.

4. Verfahren nach einem der vorstehenden Ansprüche, dadurch gekennzeichnet, daß in dem lagenormierten Bild (9) ein nach Höhe und Breite normierter Bildbereich (9A) ausgewählt wird.

5. Verfahren nach einem der vorstehenden Ansprüche, dadurch gekennzeichnet, daß ein Ausschnitt des Bildes (9), welcher das zu identifizierende Objekt (4) oder einen vorbestimmten Teil desselben abbildet, auf eine vorgegebene Größe transformiert wird.

6. Verfahren nach einem der vorstehenden Ansprüche, dadurch gekennzeichnet, daß mit dem normierten Bildbereich (9A) eine Grauwertanalyse vorgenommen wird, wobei die Grauwerte der einzelnen Bildpunkte ermittelt und in einer Grauwertematrix gespeichert werden und/oder ein Grauwert-Histogramm erstellt wird.

7. Verfahren nach einem der vorstehenden Ansprüche, dadurch gekennzeichnet, daß die Grauwerte der einzelnen Bildpunkte bezüglich eines vorgebbaren Wertes normiert werden.

8. Verfahren nach einem der vorstehenden Ansprüche, dadurch gekennzeichnet, daß die Lagekoordinaten und Abmessungen von Bildbestandteilen in einem Merkmalssatz (A1, A2, ......) zusammengefaßt und gespeichert werden.

9. Verfahren nach einem der vorstehenden Ansprüche, dadurch gekennzeichnet, daß aus dem Grauwert-Histogramm der arithmetrische Mittelwert und/oder der quadratische Mittelwert, und/oder die Varianz, und/oder die Halbwertsbreite und/oder die Kurtosis, ermittelt werden und in einem Merkmalssatz (B1, B2, ......) zusammengefaßt und gespeichert werden.

10. Verfahren nach einem der vorstehenden Ansprüche, dadurch gekennzeichnet, daß mit der Grauwertverteilung eine Fourieranalyse durchgeführt wird und die entsprechenden Fourier-Koeffizienten in einem Merkmalssatz (C1, C2, ......) zusammengefaßt und gespeichert werden.

11. Verfahren nach einem der vorstehenden Ansprüche, dadurch gekennzeichnet, daß das Bild (9) in eine Gradientendarstellung transformiert wird und in dieser Darstellung die das abgebildete Objekt charakterisierende Merkmale mit den jeweils stärksten Gradienten bis zu einer vorgegebenen Anzahl von Merkmalen ermittelt werden und anschließend die Gradientendarstellung in eine bezüglich eines Schwellwerts diskriminierte Darstellung umgewandelt und als ein Merkmalssatz gespeichert wird, wobei der Schwellwert unter dem niedrigsten Gradientenwert der zuvor ermittelten Merkmale liegt.

12. Verfahren nach Anspruch 12, dadurch gekennzeichnet, daß vor der Erzeugung der Gradientendarstellung der Grauwert jedes Bildpunktes durch den Median der Grauwerte des Bildpunktes und der in einer vorgegebenen Umgebung des Bildpunktes liegenden Bildpunkte ersetzt wird und/oder vor der Erzeugung der Gradientendarstellung das Bild und/oder nach der Ermittlung der Merkmale mit den stärksten Gradienten und vor der Diskriminierung bezüglicn eines Schwellwertes die Gradientendarstellung mittels eines Unschärfefilters verwischt wird.

13. Verfahren nach einem der vorstehenden Ansprüche, dadurch gekennzeichnet, daß die verschiedenen Merkmalssätze (A1, A2, ......), (B1, B2, ......), (C1, C2, ......), ..., (N1, N2,......) zur eindeutigen Charakterisierung in dem Merkmalscode zusammengefaßt und gespeichert werden.

14. Verfahren nach einem der vorstehenden Ansprüche, dadurch gekennzeichnet, daß zum Vergleich der einzelnen Arten von Merkmalssätzen jeweils unterschiedliche Mindestübereinstimmungsverhältnisse (WA, WB, WC, ......) festlegbar sind.

15. Verfahren nach einem der vorstehenden Ansprüche, dadurch gekennzeichnet, daß die bei einer Aufnahme des Objekts (4) an einer zu Beginn des Transport- und/oder Verarbeitungsablaufs angeordnete Eingangsstation (7) ermittelten Merkmalssätze des Objekts (4) in einer zentralen Datenbank (5A) gespeichert werden und daß an vor und/oder hinter den jeweiligen Verarbeitungsstationen (1) oder Transportstrecken (2) angeordneten Kontrollstationen (12) oder an einer Ausgangsstation (6) von dem zu identifizierenden Objekt (4) erneut diese Merkmalssätze ermittelt werden, und zur Identifizierung mit den in der zentralen Datenbank (5A) gespeicherten und im Merkmalscode zusammengefaßten Merkmalssätzen der im Umlauf befindlichen Objekt (4) verglichen werden.

16. Verfahren nach einem der vorstehenden Ansprüche, dadurch gekennzeichnet, daß ein Zentralcomputer (5) an die zentrale Datenbank (5A) angeschlossen ist und daß alle weiteren Computer (10) mit diesem Zentralcomputer (5) und der Datenbank (5A) und/oder untereinander vernetzt sind.

17. Verfahren nach einem der vorstehenden Ansprüche, dadurch gekennzeichnet, daß für die den Transport- und/oder Verarbeitungsbetrieb durchlaufenden und/oder die im Verarbeitungsprozeß entstehenden Objekte (4) Merkmalscodes in der zentralen Datenbank (5a) und/oder in den Zellen eines vom Zentralcomputer (6) simulierten neuronalen Netzes gespeichert sind.

18. Verfahren nach einem der vorstehenden Ansprüche, dadurch gekennzeichnet, daß in den Merkmalscode eines jeden Objekts (4) der Zeitpunkt der Registrierung an der Eingangsstation (7) aufgenommen wird.

19. Verfahren nach einem der vorstehenden Ansprüche, dadurch gekennzeichnet, daß anhand des Verarbeitungs-Ablaufplanes und der jeweiligen Eintrittszeiten der Objekte (4) in den Verarbeitungsablauf unter Berücksichtigung von Transport- und Verarbeitungszeiten in dem Zentralcomputer (5) jeweils vorherberechnet wird, welche Objekte (4) in bestimmten Zeitintervallen an jeweils einer bestimmten Kontroll- (12) oder Ausgangsstation (6) mit einer gewissen Wahrscheinlichkeit sind, wobei zur Identifizierung eines Objekts (4) an der jeweiligen Kontroll- (12) oder Ausgangsstation (6) zuerst nur die Merkmalscodes dieser Gruppe von Objekten (4) für einen Übereinstimmungsvergleich herangezogen werden.

20. Verfahren nach einem der vorstehenden Ansprüche, dadurch gekennzeichnet, daß mittels der Kontrollstationen (12) dem Zentralcomputer (5) gemeldet wird, welches der Objekte (4) eine bestimmte Verarbeitungsstation (1) oder Transportstrecke (2) erreicht bzw. durchlaufen hat, und anhand eines im Zentralcomputer (5) gespeicherten Verarbeitungs-Ablaufplanes überprüft wird, ob das identifizierte Objekt (4) richtigerweise an dieser Kontrollstation (12) ist, und anhand des Verarbeitungs-Ablaufplanes für die Beförderung des Objekts (4) zur jeweils nächsten verarbeitungsstation (1) oder Transportstrecke (2) ggf. eine Weiche (13) gestellt wird, und daß jeweils an den Ausgangsstationen (6) dem Zentralcomputer (5) gemeldet wird, welches der Objekte (4) die jeweilige Ausgangsstation (6) erreicht hat, und anhand des Verarbeitungs-Ablaufplanes überprüft wird, ob das identifizierte Objekt (4) richtigerweise an der entsprechenden Ausgangsstation (6) ist und/oder an den Zentralcomputer (5) eine Auftragsabschlußmeldung gegeben wird und/oder der Merkmalscode dieses Objekts (4) aus der zentralen Datenbank (5A) entfernt wird und/oder ein Gerät (17) angesteuert wird, welches jedes ausgehende Objekt mit einem Identifizierungs- und Herkunftsnachweis versieht.

21. Verfahren nach einem der vorstehenden Ansprüche, dadurch gekennzeichnet, daß jeweils an den Eingangsstationen (7), den Kontrollstationen (12) und den Ausgangsstationen (6) Objekte (4) signalisierende Initiatoren, wie eine Lichtschranke (15, 15'), mechanische oder induktive Kontaktschalter, angeordnet sind und immer dann, wenn der jeweilige Initiator ein Auslösesignal gibt, mit der entsprechenden Kamera (8) ein digitales Bild (9) des jeweiligen Objekts (4) aufgenommen und gespeichert wird.

22. Verfahren nach einem der vorstehenden Ansprüche, dadurch gekennzeichnet, daß die Objekte (4) Fleischhaken (4a) sind, mit denen Schlachtvieh entlang verschiedener Verarbeitungsstationen (6, 12) eines Schlachthofs transportiert werden und/oder Teilstücke (4c) von Schlachtkörpern (4b) in einem Zerlegebereich (16) eines Schlachthofs sind.

23. Verfahren nach einem der vorstehenden Ansprüche, dadurch gekennzeichnet, daß die Objekte (4) Bücher sind, welche nach Größe und/oder Titelbild und/oder Rückseiten sortiert werden.

## Claims

1. A method of monitoring and/or controlling a given conveyance sequence and/or processing sequence by individual registration of each conveyance object and/or processing object and/or machining object before the sequence and later recognition of it during the sequence or its conveyance equipment holding it during the sequence, such as hooks, boxes or the like as an object at different stations, characterized in that
- at least some details of an image of each individual object are recorded by an electronic camera before the object passes through the conveyance sequence and/or processing sequence,
- from the recorded and digitized image, an image processing program extracts features of the original surface and/or shape of the object, in particular individual edges, recesses, elevations, holes and/or brightness and/or variations in color, shape and dimensions of the object (4), which features unambiguously characterize the object (4),
- the extracted features are combined in a feature code individualizing the object and stored for registration of the object (4),
- during the conveyance sequence and/or processing sequence, another image of each individual object (4) is recorded by at least one other electronic camera (8) at a control station (12),
- the features unambiguously characterizing each object (4) are extracted by an image processing program from each of the additional recorded and digitized images,
- these extracted features for each object are combined in another feature code which individualizes this object, and
- by comparing these additional individualizing feature codes with the stored individualizing feature codes, each of the objects can be identified during the conveyance and/or processing sequence.

2. A method according to claim 1, characterized in that the image (9) of the respective object (4) recorded by the electronic camera (8) is stored in a pixel matrix (11) in an electronic image memory in a computer (10), and the position, dimensions or the like of the characteristic features of the object (4) are determined in a grid of the pixel matrix (11) and relative to one another.

3. A method according to one of the preceding claims, characterized in that the position of the respective image (9) is standardized with the image processing program by resorting or changing the address of the pixels in the grid of the pixel matrix (11) according to predetermined criteria.

4. A method according to one of the preceding claims, characterized in that an image area (9A) standardized according to height and width is selected from the position-standardized image (9).

5. A method according to one of the preceding claims, characterized in that a detail of the image (9) which images the object (4) to be identified or a predetermined part thereof is transformed to a predetermined size.

6. A method according to one of the preceding claims, characterized in that a gray value analysis is performed with the standardized image area (9A), with the gray values of the individual pixels being determined and stored in a gray value matrix and/or a gray value histogram being generated.

7. A method according to one of the preceding claims, characterized in that the gray values of the individual pixels are standardized with respect to a predetermined value.

8. A method according to one of the preceding claims, characterized in that the position coordinates and dimensions of image components are combined and stored in a set of features (A1, A2, ...).

9. A method according to one of the preceding claims, characterized in that the arithmetic mean and/or the square mean and/or the variance and/or the half-life and/or the kurtosis are determined from the gray value histogram and are combined and stored in a set of features (B1, B2, ...).

10. A method according to one of the preceding claims, characterized in that a Fourier analysis is performed with the gray value distribution, and the corresponding Fourier coefficients are combined and stored in a set of features (C1, C2, ...).

11. A method according to one of the preceding claims, characterized in that the image (9) is transformed into a gradient diagram, and in this diagram the features characterizing the object imaged are determined with the greatest gradients up to a predetermined number of features, and next the gradient diagram is converted to a diagram that is discriminated with regard to a threshold value and then it is stored as a set of features, with the threshold value being below the lowest gradient value of the features determined previously.

12. A method according to claim 12, characterized in that before generating the gradient diagram, the gray value of each pixel is replaced by the median gray value of the pixel and the pixels in a given environment of the pixel and/or before generating the gradient diagram, the image is blurred by means of a blurriness filter, and/or after determination of the features with the greatest gradient and before discrimination with respect to a threshold value, the gradient diagram is blurred by means of such a filter.

13. A method according to one of the preceding claims, characterized in that the various sets of features (A1, A2, ...), (B1, B2, ...), (C1, C2, ...), ..., (N1, N2, ...) are combined and stored in the feature code for unambiguous characterization.

14. A method according to one of the preceding claims, characterized in that different minimum correspondence ratios (WA, WB, WC, ...) can be established for comparing the individual types of sets of features.

15. A method according to one of the preceding claims, characterized in that the sets of features of the object (4) determined in recording the object (4) at an input station (7) arranged at the beginning of the conveyance sequence and/or the processing sequence are stored in a central database (5A), and these sets of features are determined again at control stations (12) arranged upstream and/or downstream from the respective processing stations (1) or conveyance lines (2) or they are determined at an output station (6) and then compared with the sets of features of the object (4) being processed, said features being combined in the feature code and stored in the central database (5A) for the purpose of identification.

16. A method according to one of the preceding claims, characterized in that a central computer (5) is connected to the central database (5A), and all the other computers (10) are linked to this central computer (5) and the database (5A) and/or interlinked with one another.

17. A method according to one of the preceding claims, characterized in that feature codes are stored in the central database (5A) and/or in the cells of a neural network simulated by the central computer (6) for the objects (4) passing through the conveyance and/or processing operation and/or created in the processing operation.

18. A method according to one of the preceding claims, characterized in that the time of registration is recorded in the feature code of each individual object (4) at the input station (7).

19. A method according to one of the preceding claims, characterized in that on the basis of the processing sequence and the respective times of entrance of the objects (4) into the processing sequence, taking into account conveyance and processing times, the central computer (5) can calculate in advance which objects (4) have a certain probability of being at a certain control station (12) or output station (6) in certain intervals of time, with at first only the feature codes of this group of objects (4) being used for a comparison of correspondence for the purpose of identifying an object (4) at the respective control station (12) or output station (6).

20. A method according to one of the preceding claims, characterized in that the control stations (12) notify the central computer (5) which of the objects (4) has reached or passed a certain processing station (1) or conveyance line (2), and a check is performed on the basis of a processing sequence plan stored in the central computer (5) whether the identified object (4) is correctly located at this control station (12), and a shunt (13) is optionally set on the basis of the processing sequence plan for conveyance of the object (4) to the next processing station (1) or conveyance line (2), and at the output station (6) the central computer (5) is notified which of the objects (4) has reached the respective output station (6), and a check is performed on the basis of the processing sequence plan to determine whether the identified object (4) is correctly located at the respective output station (6) and/or whether a job ending message is sent to the central computer (5) and/or whether the feature code of this object (4) is removed from the central data base (5A) and/or a device which provides each outgoing object with proof of identification or origin is controlled.

21. A method according to one of the preceding claims, characterized in that initiators such as a photoelectric barrier (15, 15'), mechanical or inductive contact switches are arranged at the input stations (7), the control stations (12) and the output stations (6), and whenever the respective initiator delivers a release signal, a digital image (9) of the respective object (4) is recorded with the respective camera (8) and stored.

22. A method according to one of the preceding claims, characterized in that the objects (4) are meat hooks (4a) with which slaughtered cattle are conveyed along various processing stations (6, 12) of a slaughterhouse and/or parts (4c) of carcasses (4b) in a butchering area (16) of a slaughterhouse.

23. A method according to one of the preceding claims, characterized in that the objects (4) are books which are sorted according to size and/or title page and/or back page.

## Revendications

1. Procédé pour surveiller et/ou commander un processus de transport et/ou de traitement déterminé au préalable, au moyen de l'enregistrement individuel avant le passage et au moyen de la détection ultérieure pendant le passage de chaque produit transporté et/ou transformé et/ou traité ou de son dispositif de transport qui le retient pendant son passage, tel que crochets, caisses ou similaires, comme objet à différents postes, caractérisé en ce que:
- une caméra électronique prend une image de chaque objet individualisé, au moins par extraits, avant que l'objet passe par l'opération de transport et/ou de transformation,
- les caractéristiques de la surface originelle et/ou de la forme de l'objet, en particulier les bords individuels, les enfoncements, les reliefs, les trous et/ou la clarté et/ou les variations de couleurs, les formes et les dimensions de l'objet (4), caractérisant l'objet (4) de manière non-équivoque, sont extraites de l'image prise et numérisée par un programme de traitement des images,
- les caractéristiques extraites sont regroupées sous un code de caractéristiques individualisant l'objet et mises en mémoire aux fins d'enregistrement de l'objet (4),
- pendant le déroulement du transport et/ou de la transformation, une autre image est prise de l'objet (4) par au moins une autre caméra électronique (8) d'un poste de contrôle (12),
- un programme de traitement des images extrait à nouveau les caractéristiques caractérisant l'objet (4) de manière non-équivoque de chacune des autres images prises et numérisées;
- ces caractéristiques extraites pour chaque objet sont regroupées dans un autre code de caractéristiques individualisant cet objet, et
- par comparaison de cet autre code de caractéristiques individualisées avec les codes de caractéristiques individualisés, chacun des objets est identifiable pendant le déroulement du transport et/ou de la transformation.

2. Procédé selon la revendication 1, caractérisé en ce que l'image (9) de l'objet (4) respectif prise par la caméra électronique (8) est stockée dans la mémoire d'images d'un ordinateur (10) dans une matrice de points d'image (11) et en ce que la position, les dimensions ou l'équivalent des caractéristiques distinctives de l'objet sont déterminées dans la trame de la matrice de points d'images (11) et les unes par rapport aux autres.

3. Procédé selon l'une des revendications précédentes, caractérisé en ce que suivant des critères déterminables au préalable par tri ou ré-adressage des points d'images dans la trame de la matrice de points d'images (11), on opère un cadrage de la position des images (9) respectives avec le programme de traitement d'images.

4. Procédé selon l'une des revendications précédentes, caractérisé en ce qu'on sélectionne une zone d'image (9A) cadrée en hauteur et en largeur dans l'image (9) dont la position a été cadrée.

5. Procédé selon l'une des revendications précédentes, caractérisé en ce qu'un extrait de l'image (9) qui reproduit l'objet (4) à identifier ou une partie de ce dernier est transformé pour prendre une dimension déterminée au préalable.

6. Procédé selon l'une des revendications précédentes, caractérisé en ce qu'on opère une analyse de valeur de gris avec la zone d'image cadrée (9A), les valeurs de gris des différents points d'image étant calculées et mises en mémoire dans une matrice de valeurs de gris et/ou un histogramme des valeurs de gris étant établi.

7. Procédé selon l'une des revendications précédentes, caractérisé en ce que les valeurs de gris des points d'image individuels sont normalisées par rapport à une valeur déterminable au préalable.

8. Procédé selon l'une des revendications précédentes, caractérisé en ce que les coordonnées de position et les dimensions de composants d'image sont regroupées dans un ensemble de caractéristiques (A1, A2, ...) et mis en mémoire.

9. Procédé selon l'une des revendications précédentes, caractérisé en ce qu'à partir de l'histogramme des valeurs de gris on calcule la moyenne arithmétique et/ou la moyenne quadratique et/ou la variance et/ou la largeur de valeur moyenne et en ce qu'on les regroupe et les met en mémoire dans un ensemble de caractéristiques (B1, B2, ...).

10. Procédé selon l'une des revendications précédentes, caractérisé en ce qu'avec la distribution des valeurs de gris, on procède à une analyse de Fourier et en ce que les coefficients de Fourier correspondants sont regroupés et mis en mémoire dans un ensemble de caractéristiques (C1, C2, ...).

11. Procédé selon l'une des revendications précédentes, caractérisé en ce que l'image (9) est transformée en représentation de gradients et en ce que les caractéristiques distinctives de l'objet reproduit sont calculées avec les gradients les plus élevés, jusqu'à un nombre de caractéristiques déterminé au préalable, et en ce qu'ensuite la répartition en gradients est transformée en une représentation discriminante par rapport à une valeur de seuil et mise en mémoire sous forme d'ensemble de caractéristiques, la valeur de seuil étant inférieure à la valeur de gradient la plus basse des caractéristiques calculées auparavant.

12. Procédé selon la revendication 11, caractérisé en ce qu'avant de réaliser la représentation en gradients, la valeur de gris de chaque point d'image est remplacée par la médiane des valeurs de gris du point d'image et des points d'image situés dans un environnement prédéterminé du point d'image et/ou en ce qu'avant de réaliser la représentation en gradients, l'image et/ou après le calcul des caractéristiques ayant les gradients les plus élevés et avant la discrimination par rapport à une valeur de seuil, la représentation en gradients est maculée au moyen d'un filtre de flou.

13. Procédé selon l'une des revendications précédentes, caractérisé en ce que les différents ensembles de caractéristiques (A1, A2, ...), (B1, B2, ...), (C1, C2, ...) ..., (N1, N2, ...) sont regroupés et mis en mémoire sous le code de caractéristiques en vue d'une caractérisation non-équivoque.

14. Procédé selon l'une des revendications précédentes, caractérisé en ce que pour comparer les différents types d'ensembles de caractéristiques, des relations de concordance minimum différentes (WA, WB, WC, ...) sont définissables.

15. Procédé selon l'une des revendications précédentes, caractérisé en ce que les ensembles de caractéristiques de l'objet (4) calculés lors d'une réception de l'objet (4) à un poste d'entrée (7) situé au début du processus de transport et/ou de transformation sont mises en mémoire dans une base de données centrale (5A) et en ce qu'au niveau de postes de contrôle (12) prévus en amont et/ou en aval des postes de transformation respectifs (1) ou voies de transport respectives (2), on recalcule ces ensembles de caractéristiques de l'objet (4) qu'il s'agit d'identifier, et on les compare pour identification aux ensembles de caractéristiques des objets (4) en circulation mis en mémoire dans la base de données centrale (5A) et regroupés sous le code de caractéristiques.

16. Procédé selon l'une des revendications précédentes, caractérisé en ce qu'un ordinateur central (5) est en liaison avec la banque de données centrale (5A) et en ce que tous les autres ordinateurs (10) sont reliés en réseau avec cet ordinateur central (5) et la base de données (5A) et/ou entre eux.

17. Procédé selon l'une des revendications précédentes, caractérisé en ce que pour les objets (4) soumis à l'opération de transport et/ou de transformation et/ou créés lors de l'opération de transformation, des codes de caractéristiques sont mis en mémoire dans la base de données centrale (5A) et/ou dans les cellules d'un réseau neuronal simulé par l'ordinateur central (6).

18. Procédé selon l'une des revendications précédentes, caractérisé en ce que sous le code de caractéristiques de chaque objet (4), on reprend le moment de l'enregistrement au poste d'entrée (7).

19. Procédé selon l'une des revendications précédentes, caractérisé en ce qu'à l'aide du plan de déroulement de la transformation et des temps d'entrée respectifs des objets (4) dans le processus de transformation, l'ordinateur central (5) effectue un calcul prévisionnel, compte tenu des temps de transport et de transformation, pour déterminer les objets (4) qui se trouveront avec une certaine probabilité, à des intervalles déterminés, à un poste de contrôle (12) ou de sortie (6) spécifique, auquel cas on utilise d'abord seulement, en vue d'identifier un objet (4) se trouvant au poste de contrôle (12) ou de sortie (6), les codes de caractéristiques de ce groupe d'objets (4), en vue d'une comparaison de concordance.

20. Procédé selon l'une des revendications précédentes, caractérisé en ce qu'au moyen des postes de contrôle (12), il est signalé à l'ordinateur central (5) lequel des objets (4) a atteint ou passé un poste de transformation (1) ou voie de transport (2) déterminé, et en ce qu'au moyen d'un plan de déroulement de la transformation mis en mémoire dans l'ordinateur central (5), on contrôle s'il est correct que l'objet identifié (4) se trouve à ce poste de contrôle (12), en ce qu'un aiguillage (13), éventuellement, est réglé à l'aide du plan de déroulement de la transformation en vue de l'acheminement de l'objet (4) sur le poste de transformation (1) ou chemin de transport (2) le plus proche, et en ce qu'à chacun des postes de sortie (6), il est signalé à l'ordinateur central (5) lequel des objets (4) a atteint le poste de sortie respectif (6), et en ce qu'à l'aide du plan de déroulement de la transformation, on contrôle s'il est correct que l'objet identifié (4) se trouve au poste de sortie correspondant (6) et/ou si une information de fin de mission est donnée à l'ordinateur central (5) et/ou si le code de caractéristiques de cet objet (4) est effacé de la base de données centrale (5A) et/ou si un appareil (17) est enclenché, lequel munit chaque objet sortant d'une preuve d'identification et de provenance.

21. Procédé selon l'une des revendications précédentes, caractérisé en ce qu'à chacun des postes d'entrée (7), des postes de contrôle (12) et des postes de sortie (13), on a prévu des commutateurs capacitifs signalant les objets (4), tels que barrière photoélectrique (15, 15'), contacteurs mécaniques ou inductifs, et en ce que chaque fois que le commutateur capacitif concerné émet un signal de déclenchement, on prend et met en mémoire une image numérique (9) de chaque objet (4), avec la caméra correspondante (8).

22. Procédé selon l'une des revendications précédentes, caractérisé en ce que les objets (4) sont des crocs de boucher (4a) avec lesquels des animaux abattus sont transportés le long des différents postes de transformation (6, 12) d'un abattoir et/ou sont des parties (4c) de carcasses (4b) dans une zone d'équarrissage (16) d'un abattoir.

23. Procédé selon l'une des revendications précédentes, caractérisé en ce que les objets (4) sont des livres qui sont triés selon leur grosseur et/ou la planche de titre et/ou les dos.
